# FASCICULE DE BREVET EUROPEEN

(11) **EP 4 585 440 B1**
(45) Date de publication et mention de la délivrance du brevet: **14.10.2026**
(21) Numéro de dépôt: 25151339.6
(22) Date de dépôt: 10.01.2025
(51) Int. Cl.: B60K 1/04

(54) **PLANCHER DE VEHICULE AUTOMOBILE AVEC MARQUAGE VISUEL POUR CORDON D' ETANCHEITE**
KRAFTFAHRZEUGBODEN MIT VISUELLER MARKIERUNG FÜR DICHTUNGSSCHNUR
MOTOR VEHICLE FLOOR WITH VISUAL MARKING FOR SEALING CORD

(30) Priorité: 15.01.2024 FR 2400374
(43) Date de publication de la demande: 16.07.2025
(73) Titulaire: Stellantis Auto SAS, 78300 Poissy (FR)
(72) Inventeur: BERTH, STEPHANE, 92320 Chatillon (FR)
(74) Mandataire: BCIP

(56) Documents cités:
- US-A1- 2019 009 662
- US-B2- 11 688 910
- US-B2- 8 900 744

## Description

### Domaine technique

La présente invention concerne le domaine des véhicules automobiles, plus particulièrement le domaine de la structure des véhicules automobiles.

### Technique antérieure

Les plateformes des véhicules automobiles comportant un bac pour accumulateurs d'énergie électrique de traction, couramment désigné bac batteries, disposent d'un plancher d'habitacle fixé aux longerons et forme une cavité de réception des batteries de traction, ladite cavité étant classiquement configurée pour être entièrement recouverte par ledit bac batteries. Une telle conception permet d'optimiser la densité volumétrique des batteries, assurant une augmentation de la densité énergétique et des réductions de coûts.

De façon conventionnelle, lors de l'assemblage des véhicules automobiles comportant ce type de plateformes, un joint d'étanchéité est généralement disposé sur le plancher préalablement à la mise en place du bac batteries, de manière à assurer l'étanchéité du soubassement empêchant le passage d'eau venant de l'extérieur vers l'habitacle.

Toutefois, la mise en place des joints d'étanchéité peut être sujette à des problèmes de précision, pouvant entraîner des défauts et des non-conformités des assemblages. Ces problèmes peuvent être liés à une contamination de la cavité de réception des batteries et/ou à un excès de cordon déposé, pouvant provoquer un débordement sur des éléments de la structure du véhicule automobile.

Le document CN 216969800 U divulgue un châssis de véhicule automobile comprenant un plancher recevant des batteries de traction disposées dans une partie creuse formée dans un couvercle correspondant, ce dernier comportant un joint d'étanchéité destiné à être pris en sandwich entre un bord du couvercle et le plancher.

Néanmoins, la solution proposée par le document ne permet pas d'empêcher une mauvaise mise en place du joint d'étanchéité sur le couvercle de batteries. En effet, la proposition présentée dans le document n'adresse pas efficacement le problème de la mauvaise installation du joint d'étanchéité sur les planchers, laissant ainsi subsister des risques de non-conformité dans l'assemblage des véhicules automobiles.

Par ailleurs, les documents US11688910B2, US2019/009662 A1 et US8900744B2 divulguent un plancher d'habitacle selon l'introduction de la revendication 1.

### Exposé de l'invention

La présente invention a pour objectif de pallier au moins un des inconvénients de l'état de la technique susmentionné. Plus particulièrement, l'invention a pour objectif de proposer une solution simple et économique permettant d'assurer une application correcte du cordon d'étanchéité, garantissant la conformité des assemblages des véhicules automobiles.

À cet effet, l'invention a pour objet un plancher d'habitacle pour véhicule automobile, selon la revendication 1.

Selon un mode de réalisation, l'au moins une encoche de marquage périphérique comprend une forme linéaire s'étendant sensiblement parallèlement au bord extérieur du plancher et sur une longueur égale à au moins 100 mm.

Selon l'invention, l'au moins une encoche de marquage périphérique comprend plusieurs encoches linéaires réparties uniformément suivant toute une périphérie dudit plancher.

Selon un mode de réalisation, l'au moins une encoche de marquage périphérique comprend une largeur transversale égale à au moins 0.5 mm et à au plus 1.5 mm. Selon un mode de réalisation, l'au moins une encoche de marquage périphérique comprend une profondeur présentée à partir d'une face externe de la bande périphérique, qui est comprise entre 0.2 mm et 1 mm.

Selon un mode de réalisation, l'au moins une encoche de marquage périphérique est transversalement disposée à au moins 2 mm du périmètre de la zone de réception du bac, et à au plus 8 mm dudit périmètre.

L'invention concerne également un véhicule automobile selon la revendication 7.

L'invention a également trait à un procédé d'assemblage d'un véhicule automobile, selon la revendication 8.

Selon l'invention, la mise en position du cordon d'étanchéité est directement réalisée entre le bord extérieur du plancher et l'au moins une encoche de marquage périphérique, ladite au moins une encoche de marquage périphérique indiquant visuellement une délimitation d'un espace de la bande périphérique du plancher pour réception du cordon d'étanchéité.

Selon un mode de réalisation, l'assemblage du plancher aux longerons comprend un soudage dudit plancher aux longerons, et le montage du bac sur le plancher comprend un vissage dudit bac avec le plancher et les longerons.

Les mesures de l'invention sont avantageuses en ce que les encoches de marquage périphériques disposées directement au droit de la bande périphérique du plancher, constituent un marquage servant d'indication de positionnement pour une application précise du cordon d'étanchéité, de manière à éviter d'empiéter sur la zone de réception du bac batteries au niveau de la bande périphérique.

De plus, l'utilisation d'encoches de marquage périphériques se révèle également bénéfique en facilitant la vérification de l'absence de contamination dans la zone de réception du bac batteries. Cela contribue à garantir un assemblage conforme du véhicule automobile, permettant d'améliorer la qualité dudit assemblage, et cela, à moindre coût.

### Brève description des dessins

[Fig 1] représente une vue éclatée et en perspective lors d'un assemblage d'un bac pour accumulateurs d'énergie électrique de traction à un plancher d'habitacle d'un véhicule automobile selon l'invention ;
[Fig 2] représente une vue en perspective du plancher du véhicule automobile de la figure 1, comprenant une bande périphérique pourvue d'au moins une encoche de marquage périphérique destinée à assurer une délimitation visuelle pour réceptionner un cordon d'étanchéité ;
[Fig 3] représente une vue agrandie d'une encoche de marquage périphérique du plancher de la figure 2, ladite encoche étant disposée entre un bord extérieur du plancher et un périmètre d'une zone de réception du bac sur la bande périphérique ;
[Fig 4] représente une vue en perspective du bac batteries monté par vissage sur la bande périphérique du plancher, et le cordon d'étanchéité étant disposé sur ladite bande périphérique tout en étant délimité transversalement par l'au moins une encoche de marquage périphérique.

### Description détaillée

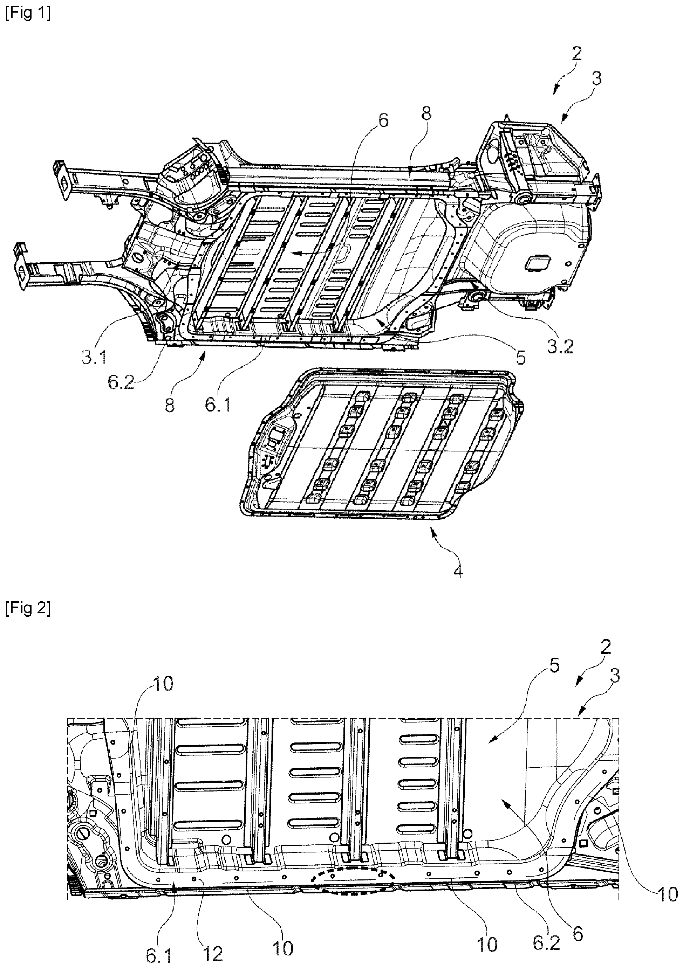

La figure 1 représente une vue éclatée et en perspective lors d'un assemblage d'un bac 4 pour accumulateurs d'énergie électrique de traction, communément désigné par bac batteries 4, à un plancher 6 d'habitacle d'un véhicule automobile 2 selon l'invention.

Le véhicule automobile 2 est un véhicule à traction électrique, dans lequel le plancher 6 comprend une partie interne creuse formant avec le bac batteries 4 une cavité 5 de réception des accumulateurs d'énergie de traction, ledit plancher 6 sert avantageusement de couvercle au bac batteries 4, il s'agit d'une conception couramment désignée par le nom anglais : « Cell to Body ».

Le véhicule automobile 2 comprend un châssis 3 comportant deux longerons 8 s'étendant longitudinalement de part et d'autre du plancher 6. Préférentiellement, le plancher 6 est fixé par soudage aux deux longerons 8, ainsi qu'à une partie avant 3.1 et à une partie arrière 3.2 du châssis 3.

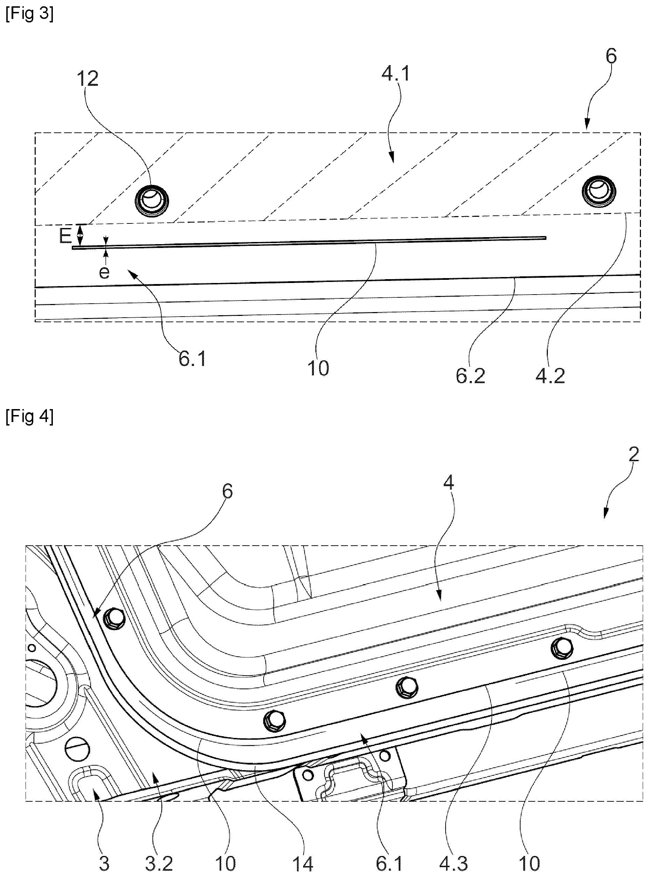

Avantageusement, la présente invention propose un procédé d'assemblage du véhicule automobile 2, comprenant une mise en position d'un cordon d'étanchéité (visible aux figure 3 et 4) au droit d'une bande périphérique 6.1 du plancher 6, et cela, préalablement à un montage du bac 4 sur ledit plancher 6.

De façon avantageuse, la mise en position du cordon d'étanchéité sur la bande périphérique 6.1 est assurée de manière précise et sans débordement vers la cavité 5 ou en dehors du bord extérieur 6.2 du plancher 6. Une telle précision est assurée grâce à au moins une encoche de marquage périphérique, dont la forme et la position seront détaillées plus loin dans la présente description.

La figure 2 représente une vue en perspective du plancher 6 du véhicule automobile 2 de la figure 1, comprenant l'au moins une encoche 10 de marquage périphérique destinée à assurer une délimitation visuelle pour réceptionner un cordon d'étanchéité sur la bande périphérique 6.1.

Préférentiellement, l'au moins une encoche 10 de marquage périphérique comprend plusieurs encoches 10 réparties uniformément suivant toute une périphérie du plancher 6, et qui sont plus préférentiellement identiques. Chaque encoche 10 comprend une forme linéaire s'étendant sensiblement parallèlement au bord extérieur 6.2 du plancher 6.

Alternativement, le plancher 6 peut comprendre qu'une seule encoche 10 qui s'étend au droit de la bande 6.1 et sur toute la périphérie dudit plancher 6.

Chaque encoche 10 linéaire peut être réalisée par un rainurage (avec enlèvement de matière) sur le plancher 6 ou directement formée avec ledit plancher. Préférentiellement, l'encoche 10 est directement formée avec le plancher par emboutissage.

On peut voir que la bande périphérique 6.1 comprend une pluralité d'orifices 12, il s'agit préférablement d'écrous 12 de fixation du bac au plancher 6, lesdits écrous 12 étant directement soudés au châssis 3 du véhicule automobile 2.

Le cadre ovale en pointillés entourant une des encoches 10 de la bande périphérique 6.1, correspond à la portion agrandie visible à la figure 3.

En référence à la figure 3, on peut voir que l'encoche 10 est disposée entre le bord extérieur 6.2 du plancher 6 et un périmètre 4.2 d'une zone de réception 4.1 du bac batteries sur la bande périphérique 6.1.

La zone de réception 4.1 (représentée par des traits en pointillées) permet l'accostage du bac batteries avant sa fixation par vissage au plancher 6. Le périmètre 4.2 de ladite zone de réception 4.1 est destiné à être directement aligné avec un bord extérieur du bac (bord 4.3 visible à la figure 4), après le montage dudit bac sur le plancher 6.

Chacune des pluralités d'encoches 10 s'étend parallèlement au bord 6.2 et suivant une longueur égale, de préférence, à au moins 100 mm, et plus préférentiellement sur environ 150 mm.

Préférentiellement, chaque encoche 10 de marquage périphérique comprend une largeur transversale e égale à au moins 0.5 mm et à au plus 1.5 mm. L'encoche 10 comprend aussi une profondeur présentée à partir d'une face externe de la bande périphérique 6.1 et suivant une direction verticale du véhicule automobile, qui est comprise entre 0.2 mm et 1 mm.

Plus préférentiellement, chaque encoche 10 est d'une profondeur de 0.3 mm et d'une largeur e de 1 mm, et est disposée à proximité du périmètre 4.2 de zone de réception 4.1, d'une distance E présentée entre l'encoche 10 et le périmètre 4.2, égale à au moins 2 mm et à au plus 8 mm dudit périmètre, et encore plus préférentiellement égale à environ 3 à 5 mm.

L'ensemble des encoches 10 de marquage périphérique constitue un seul marquage visuel sur toute la périphérie du plancher 6 permettant d'indiquer la limite à ne pas dépasser pour l'application du cordon d'étanchéité, de façon à ce que ledit cordon soit bien positionné et sans déborder vers la zone de réception 4.1 du bac batteries. Les encoches 10 permettent ensuite la vérification de la non-pollution de ladite zone de réception 4.1 destinée à recevoir le bac batteries.

La figure 4 représente une vue en perspective du bac batteries 4 monté par vissage sur la bande périphérique 6.1 du plancher 6.

Le cordon d'étanchéité 14 est disposé sur la bande périphérique 6.1 tout en étant délimité transversalement par les encoches 10 de marquage périphérique.

Avantageusement, l'ensemble des encoches 10 permet de délimiter transversalement le cordon d'étanchéité 14 entre le bord extérieur 6.2 du plancher 6 et le bord extérieur 4.3 du bac 4 qui est préférentiellement contenu à l'intérieur dudit bord extérieur 6.2 du plancher 6.

Le cordon d'étanchéité 14 peut correspondre à un joint d'étanchéité préfabriqué (par exemple, par moulage) et déposé lors de la mise en position dudit cordon 14. Préférentiellement, le cordon d'étanchéité 14 est sous forme d'une composition (par exemple, en polymère de silicone) appliquée progressivement sur toute la bande périphérique 6.1 préalablement au montage du bac 4 sur le plancher 6.

L'opération de mise en place du cordon d'étanchéité 14 est préférentiellement manuelle, assurée par un opérateur. Alternativement, la mise en place du cordon d'étanchéité 14 peut également être automatisée au moyen d'un robot. Dans cette configuration, les encoches 10 peuvent permettre d'améliorer la précision du guidage du robot lors de la mise en place du cordon 14.

De façon avantageuse, la présente invention permet grâce aux encoches 10 de marquage périphérique de garantir un montage par vissage du bac batteries 4 sur le plancher 6 qui soit conforme, avec le cordon d'étanchéité 14 strictement disposé sur la bande périphérique 6.1, tout en étant latéralement distant du bord extérieur 4.3 du bac batteries 4.

## Revendications

1. Plancher d'habitacle (6) pour véhicule automobile (2), comprenant :
- une bande périphérique (6.1) destinée à recevoir un cordon d'étanchéité (14) et un bac (4) pour accumulateurs d'énergie électrique de traction, de manière à former avec ledit plancher (6) une cavité (5) de réception desdits accumulateurs d'énergie de traction ;
ladite bande périphérique (6.1) du plancher (6) comprenant au moins une encoche de marquage périphérique (10) configurée pour délimiter transversalement le cordon d'étanchéité (14) entre un bord extérieur (6.2) du plancher (6) et un périmètre (4.2) d'une zone de réception (4.1) du bac (4) sur ladite bande périphérique (6.1), ledit périmètre (4.2) étant contenu à l'intérieur dudit bord extérieur (6.2) du plancher (6), **caractérisé en ce que** l'au moins une encoche de marquage périphérique (10) comprend plusieurs encoches (10) linéaires réparties uniformément suivant toute une périphérie dudit plancher (6).

2. Plancher (6) selon la revendication 1, dans lequel l'au moins une encoche de marquage périphérique (10) comprend une forme linéaire s'étendant sensiblement parallèlement au bord extérieur (6.2) du plancher (6) et sur une longueur égale à au moins 100 mm.

3. Plancher (6) selon l'une des revendications 1 ou 2, dans lequel l'au moins une encoche de marquage périphérique (10) comprend une largeur transversale égale à au moins 0.5 mm et à au plus 1.5 mm.

4. Plancher (6) selon l'une des revendications 1 à 3, dans lequel l'au moins une encoche de marquage périphérique (10) comprend une profondeur présentée à partir d'une face externe de la bande périphérique (6.1), qui est comprise entre 0.2 mm et 1 mm.

5. Plancher (6) selon l'une des revendications 1 à 4, dans lequel l'au moins une encoche de marquage périphérique (10) est transversalement disposée à au moins 2 mm du périmètre (4.2) de la zone de réception (4.1) du bac (4), et à au plus 8 mm dudit périmètre (4.2).

6. Véhicule automobile (2) comprenant :
- un châssis (3) comprenant deux longerons (8) s'étendant longitudinalement de part et d'autre d'un plancher d'habitacle (6) ; et
- un bac (4) pour accumulateurs d'énergie électrique de traction, monté sur le plancher d'habitacle (6) et formant avec ledit plancher (6) une cavité (5) de réception desdits accumulateurs d'énergie de traction ; et
- un cordon d'étanchéité (14) disposé sur une bande périphérique (6.1) du plancher (6),
**caractérisé en ce que**
ledit plancher (6) est selon l'une des revendications 1 à 5, et l'au moins une encoche de marquage périphérique (10) délimite transversalement le cordon d'étanchéité (14) entre le bord extérieur (6.2) du plancher (6) et un bord extérieur (4.3) du bac (4) qui est contenu à l'intérieur dudit bord extérieur (6.2) du plancher (6).

7. Procédé d'assemblage d'un véhicule automobile (2), comprenant les étapes suivantes :
- assemblage d'un plancher d'habitacle (6) et de deux longerons (8) de part et d'autre dudit plancher d'habitacle (6) ;
- montage d'un bac (4) pour accumulateurs d'énergie électrique de traction sur le plancher d'habitacle (6) ;
le véhicule automobile (2) étant selon la revendication 6, ledit procédé comprenant, en outre, une étape de mise en position du cordon d'étanchéité (14) sur la bande périphérique (6.1) du plancher (6), préalablement à l'étape de montage du bac sur ledit plancher (6),
la mise en position du cordon d'étanchéité (14) étant directement réalisée entre le bord extérieur (6.2) du plancher (6) et l'au moins une encoche de marquage périphérique (10), ladite au moins une encoche de marquage périphérique indiquant visuellement une délimitation d'un espace de la bande périphérique (6.1) du plancher (6) pour réception du cordon d'étanchéité (14).

8. Procédé selon la revendication 7, dans lequel l'assemblage du plancher (6) aux longerons (8) comprend un soudage dudit plancher (6) aux longerons (8), et le montage du bac (4) sur le plancher (6) comprend un vissage dudit bac (4) avec le plancher (6) et les longerons (8).

## Patentansprüche

1. Innenraumboden (6) für ein Kraftfahrzeug (2), bestehend aus:
- ein Randstreifen (6.1) zur Aufnahme einer Dichtungsschnur (14) und einer Wanne (4) für elektrische Traktionsspeicher, um mit dem Boden (6) einen Hohlraum (5) zur Aufnahme der Traktionsspeicher zu bilden;
Der Umfangsstreifen (6.1) des Bodens (6) umfasst mindestens eine
Umfangsmarkierungskerbe (10), die ausgebildet ist, um die Dichtungsschnur (14) zwischen einem äußeren Rand (6.2) des Bodens (6) und einem Umfang (4.2) eines Aufnahmebereichs (4.1) der Wanne (4) auf dem Umfangsstreifen (6.1) quer zu begrenzen, wobei der Umfang (4.2) innerhalb des äußeren Randes (6.2) des Bodens (6) enthalten ist, **dadurch gekennzeichnet, dass** die mindestens eine Umfangsmarkierungskerbe (10) mehrere umfasst Lineare Kerben (10), die gleichmäßig über einen gesamten Umfang des Bodens (6) verteilt sind.

2. Fußboden (6) nach Anspruch 1, wobei die mindestens eine periphere Markierungsnut (10) eine lineare Form aufweist, die sich im Wesentlichen parallel zu der Außenkante (6.2) des Fußbodens (6) und über eine Länge von mindestens 100 mm erstreckt.

3. Fußboden (6) nach einem der Ansprüche 1 oder 2, wobei die mindestens eine periphere Markierungsnut (10) eine Querbreite von mindestens 0,5 mm und höchstens 1,5 mm aufweist.

4. Fußboden (6) nach einem der Ansprüche 1 bis 3, wobei die mindestens eine periphere Markierungsnut (10) eine Tiefe umfasst, die von einer Außenfläche des peripheren Streifens (6.1) angezeigt wird, die zwischen 0,2 mm und 1 mm liegt.

5. Fußboden (6) nach einem der Ansprüche 1 bis 4, bei dem die mindestens eine periphere Markierungsnut (10) in Querrichtung mindestens 2 mm vom Umfang (4.2) des Aufnahmebereichs (4.1) der Wanne (4) und höchstens 8 mm vom Umfang (4.2) entfernt angeordnet ist.

6. Kraftfahrzeug (2), das Folgendes umfasst:
- einem Rahmen (3) mit zwei sich in Längsrichtung erstreckenden Längsträgern (8) beiderseits des Fahrgastraum-Bodens (6) und
- eine Schale (4) für elektrische Traktionsakkumulatoren, montiert am
Innenraumboden (6), der zusammen mit dem Innenraumboden (6) einen Hohlraum (5) zur Aufnahme der Fahrstromspeicher bildet, und
- eine Dichtungsschnur (14), die auf einem Umfangsband (6.1) des Bodens (6) angeordnet ist, **dadurch gekennzeichnet, dass** der Boden (6) nach einem der Ansprüche 1 bis 5 ist, und die mindestens eine Umfangsmarkierungskerbe (10) quer die Dichtungsschnur (14) zwischen dem Außenrand (6.2) des Bodens (6) und einem Außenrand (4.3) der Wanne (4) begrenzt, der innerhalb des Außenrandes (6.2) des Bodens (6) enthalten ist.

7. Verfahren zum Zusammenbau eines Kraftfahrzeugs (2), das die folgenden Schritte umfasst:
- Zusammenbau eines Innenraumbodens (6) mit zwei Längsträgern (8) auf beiden Seiten des Innenraumbodens (6);
- Anbringung einer Schale (4) für elektrische Fahrleistungsspeicher auf dem Boden des Fahrgastraums (6);
Kraftfahrzeug (2) nach Anspruch 6, wobei das Verfahren ferner einen Schritt des Positionierens der Dichtungsschnur (14) auf dem Umfangsband (6.1) des Bodens (6) vor dem Schritt des Montierens der Schale auf dem Boden (6) umfasst,
Die Positionierung der Dichtschnur (14) erfolgt unmittelbar zwischen dem Außenrand (6.2) des Bodens (6) und der mindestens einen umlaufenden Markierungsnut (10), wobei die mindestens eine umlaufende Markierungsnut eine räumliche Begrenzung des umlaufenden Streifens (6.1) des Bodens (6) zur Aufnahme der Dichtschnur (14) visuell anzeigt.

8. Verfahren nach Anspruch 7, bei dem das Verbinden des Bodens (6) mit den Längsträgern (8) das Verschweißen des Bodens (6) mit den Längsträgern (8) umfasst und das Befestigen der Wanne (4) auf dem Boden (6) das Verschrauben der Wanne (4) mit dem Boden (6) und den Längsträgern (8) umfasst.

## Claims

1. Motor vehicle passenger compartment floor (6) (2), comprising:
peripheral strip (6.1) for a sealing bead (14) and a tray (4) for electric traction energy accumulators, so as to form with said floor (6) a cavity (5) for receipt of said electric traction energy accumulators ;
said peripheral strip (6. 1) of the floor (6) comprising at least one peripheral marking notch (10) configured to delimit transversely the sealing bead (14) between an outer edge (6. 2) of the floor (6) and an area (4. 2) of a goods in zone (4. 1) of the tray (4) on said peripheral strip (6. 1), said area (4. 2) being content inside said outer edge (6. 2) of the floor (6), wherein the at least one peripheral marking notch (10) comprises several linear notches (10) distributed uniformly over an entire periphery of said floor (6).

2. Floor (6) according to Claim 1, wherein at least one peripheral marking notch (10) comprises a linear shape extending substantially parallel to the outer edge (6.2) of the floor (6) and over a length equal to at least 100 mm.

3. Floor (6) according to one of Claims 1 or 2, in which at least one peripheral marking notch (10) comprises a transverse width equal to at least 0.5 mm and at most 1.5 mm.

4. Floor (6) according to one of Claims 1 to 3, in which at least one peripheral marking notch (10) comprises a depth presented from an outer face of the peripheral strip (6.1), which is between 0.2 mm and 1 mm.

5. Floor (6) according to one of Claims 1 to 4, in which at least one peripheral marking notch (10) is transversely arranged at least 2 mm from the area (4.2) of the goods in zone (4.1) of the tray (4), and at most 8 mm from said area (4.2).

6. Motor vehicle (2) comprising :
a frame (3) comprising two longitudinal members (8) extending longitudinally on either side of a passenger compartment floor (6); and
- a tray (4) for electric traction energy accumulators, mounted on the passenger compartment floor (6) and forming with said floor (6) a cavity (5) for receipt of said traction energy accumulators; and
sealing bead (14) arranged on a peripheral strip (6.1) of the floor (6), wherein said floor (6) is according to one of claims 1 to 5, and the at least one peripheral marking notch (10) transversely delimits the sealing bead (14) between the outer edge (6.2) of the floor (6) and an outer edge (4.3) of the tray (4) which is content inside said outer edge (6.2) of the floor (6).

7. Method of assembling a motor vehicle (2), comprising the following steps:
- assembly of a passenger compartment floor (6) and two side rails (8) on either side of said passenger compartment floor (6);
- assembly line of a tray (4) for accumulators of electrical traction energy on the passenger compartment floor (6);
the motor vehicle (2) being according to claim 6, said method further comprising a step of placing the sealing bead (14) in position on the peripheral strip (6. 1) of the floor (6), prior to the step of assembly line of the tray on said floor (6),
The position of the sealing bead (14) being directly realised between the outer edge (6. 2) of the floor (6) and at least one peripheral marking notch (10), said at least one peripheral marking notch visually indicating a delimitation of a space of the peripheral strip (6. 1) of the floor (6) for receipt of the sealing bead (14).

8. Method according to Claim 7, in which the assembly of the floor (6) to the side rails (8) comprises a welding of said floor (6) to the side rails (8), and the assembly line of the tray (4) to the floor (6) comprises a screwing of said tray (4) with the floor (6) and the side rails (8).
